# EUROPÄISCHE PATENTSCHRIFT

(11) **EP 2 449 416 B1**
(45) Veröffentlichungstag und Bekanntmachung des Hinweises auf die Patenterteilung: **29.11.2017**
(21) Anmeldenummer: 10727342.7
(22) Anmeldetag: 27.05.2010
(51) Int. Cl.: G02B 6/35

(54) **OPTISCHE STRAHLWEICHE**
OPTICAL SWITCH
DISPOSITIF DE DIRECTION DE FAISCEAU OPTIQUE

(30) Priorität: 30.06.2009 DE 102009027348
(43) Veröffentlichungstag der Anmeldung: 09.05.2012
(73) Patentinhaber: TRUMPF Laser GmbH, 78713 Schramberg (DE)
(72) Erfinder: VOSS, Andreas, 70563 Stuttgart (DE); RATAJ, Thomas, 70563 Stuttgart (DE)
(74) Vertreter: Kohler Schmid Möbus Patentanwälte
(86) Internationale Anmeldenummer: PCT/DE2010/050033
(87) Internationale Veröffentlichungsnummer: WO 2011/000366

(56) Entgegenhaltungen:
- DE-A1- 3 214 042
- JP-A- 1 006 916
- US-A- 4 239 330
- US-A- 5 353 363
- US-A1- 2002 006 247

## Beschreibung

Die vorliegende Erfindung betrifft sowohl eine optische Strahlweiche mit mindestens einem Eingangslichtwellenleiter, mit mehreren Ausgangslichtwellenleitern und mit einem dazwischen vorgesehenen optischen Schaltelement zum Schalten des in dem mindestens einen Eingangslichtwellenleiter geführten Lichtstrahls auf wahlweise einen der Ausgangslichtwellenleiter als auch eine optische Strahlweiche mit mehreren Eingangslichtwellenleitern, mit mindestens einem

Ausgangslichtwellenleiter und mit einem dazwischen vorgesehenen optischen Schaltelement zum wahlweisen Schalten eines in einem der

Eingangslichtwellenleiter geführten Lichtstrahls auf den mindestens einen Ausgangslichtwellenleiter.

Eine derartige optische Strahlweiche ist beispielsweise durch die US 4,303,302 bekannt geworden.

Bei dieser aus US 4,303,302 bekannten optischen Strahlweiche wird das freie Faserende des Eingangslichtwellenleiters mittels eines piezoelektrischen Elements ausgelenkt, so dass das Licht abhängig vom Auslenkwinkel in unterschiedliche Ausgangslichtleiter eingekoppelt wird. Das freie Ende des Eingangslichtwellenleiters und das piezoelektrische Elements bilden zusammen ein optisches Schaltelement. Allerdings führt der zwischen Eingangs- und Ausgangslichtleiter vorhandene Luftspalt zu folgenden Nachteilen:
- Anfälligkeit der Strahlweiche gegen Dejustage durch Alterung und thermische Effekte;
- Anfälligkeit der Strahlweiche gegen Verschmutzung und Beschädigung durch Staub und andere Verunreinigungen;
- Koppelverluste durch optische Grenzflächen (z.B. Antireflex-Beschichtungen am Übergang Luft/Lichtleiter).

Demgegenüber ist es die Aufgabe der vorliegenden Erfindung, bei einer optischen Strahlweiche der jeweils eingangs genannten Art die Freistrahlpropagation in Luft beim Schalten zwischen den mehreren Ausgangs- bzw. Eingangslichtwellenleitern zu vermeiden. US 4 239 330 A offenbart eine optische Strahlweiche mit einem Eingangslichtwellenleiter, mehreren Ausgangslichtwellenleitern und einem dazwischen vorgesehenen optischen Schaltelement zum Schalten des in dem Eingangslichtwellenleiter geführten Lichtstrahls auf wahlweise einen der Ausgangslichtwellenleiter. Das Schaltelement besteht aus zwei Elementen mit graduell variierendem Brechungsindex (GRIN-Linsen), die gegeneinander drehbar sind, und einem dazwischen befindlichen Gel.

Die Aufgabe wird in einem ersten Aspekt der Erfindung gelöst durch eine optische Strahlweiche mit den Merkmalen von Anspruch 1. Erfindungsgemäß sind der mindestens eine Eingangslichtwellenleiter (Eingangsfaser) an einem Ende und die mehreren Ausgangslichtwellenleiter (Ausgangsfasern) am gegenüberliegenden Ende des Strahlpropagationselements angefügt. Das Umschalten zwischen den Ausgangslichtwellenleitern wird durch gezieltes Auslenken und/oder Tordieren des Strahlpropagationselements und/oder einer nachgeschalteten Fokussierungsoptik erreicht. Basierend auf dieser Grundidee werden erfindungsgemäß drei alternative Ausführungsformen vorgeschlagen, die sich durch die Art der Einkopplung in die Ausgangswellenleiter unterscheiden: Die erste Ausführungsform, im Folgenden als erstes Auslenkungsprinzip bezeichnet, verwendet eine gemeinsame Fokussieroptik für alle Ausgangswellenleiter (z.B. in Form eines GRIN-Faserstücks) für die wahlweise Einkopplung in den jeweiligen Ausgangswellenleiter, während die zweite Ausführungsform, im Folgenden als zweites Auslenkungsprinzip bezeichnet, für jeden Ausgangswellenleiter eine separate Fokussieroptik verwendet. Die dritte Ausführungsform, im Folgenden als Torsionsprinzip bezeichnet, kann sowohl eine gemeinsame als auch für jeden Ausgangswellenleiter eine separate Fokussieroptik verwenden. Für die drei Prinzipien ergeben sich - wie im Folgenden näher beschrieben - unterschiedliche Auslegungen des flexiblen Strahlpropagationselements und verschiedene geometrische Anordnungen für die Ausgangswellenleiter. Vorstellbar ist in diesem Zusammenhang auch eine Kombination der alternativen Prinzipien.

Bei der optischen Strahlweiche nach dem ersten Auslenkungsprinzip werden erfindungsgemäß der Eingangslichtwellenleiter (Eingangsfaser) an einem Ende und die mehreren Ausgangslichtwellenleiter (Ausgangsfasern) am gegenüberliegenden Ende des Strahlpropagationselements angefügt. Dabei werden die Ausgangslichtwellenleiter näherungsweise parallel zueinander und rechtwinklig zur Stirnseite des Strahlpropagationselements angefügt, um eine geradlinige Strahlführung zu erzielen. Das Umschalten zwischen den Ausgangslichtwellenleitern, d.h. die Auswahl des jeweils gewünschten Ausgangslichtwellenleiters, wird durch gezieltes Auslenken der an die Ausgangslichtwellenleiter angefügten Stirnseite des Strahlpropagationselements und/oder einer nachgeschalteten Fokussierungsoptik um eine oder mehrere Achsen erreicht, welche vorzugsweise im Bereich desjenigen Endes des Strahlpropagationselements vorgesehen sind, an dem die mehreren Ausgangslichtwellenleiter vorgesehen sind.

Bei der optischen Strahlweiche nach dem zweiten Auslenkungsprinzip werden erfindungsgemäß die Ausgangslichtwellenleiter unter einem bestimmten Winkel (dem jeweiligen Biegewinkel) zur Achse des Strahlpropagationselements angefügt, um eine geradlinige Strahlführung zu erzielen. Das Umschalten zwischen den Ausgangslichtwellenleitern, d.h. die Auswahl des jeweils gewünschten Ausgangslichtwellenleiters, wird durch gezieltes Auslenken des Strahlpropagationselements und/oder einer nachgeschalteten Fokussierungsoptik um eine oder mehrere Achsen erreicht, welche vorzugsweise im Bereich desjenigen Endes des Strahlpropagationselements vorgesehen sind, an dem der mindestens eine Eingangslichtwellenleiter vorgesehen ist. Zusätzlich kann das Strahlpropagationselement der Strahlweiche nach dem zweiten Auslenkungsprinzip einen bevorzugt im Bereich der zumindest einen Achse befindlichen, einseitig verjüngten,Durchmesser aufweisen, damit beim Auslenken des Strahlpropagationselements die kritischen Materialspannungen und die biegeinduzierte Doppelbrechung, die sich negativ auf Polarisationserhaltung und Koppeleffizienz der Strahlweiche auswirken können, minimiert werden. Der Durchmesser des Strahlpropagationselements an der Ausgangsseite ist dabei gegenüber dem Durchmesser auf der Eingangsseite vergrößert. Die Verjüngung des Strahlpropagationselements wird entweder durch Tapern (Ausziehen eines Glaszylinders mit axial variablem Durchmesser nach der Bearbeitung durch gezieltes lokales Erwärmen über die Erweichungstemperatur und kontrolliertes axiales Verfahren der Zylinderenden) oder durch gezieltes Schleifen erzeugt.

Bei der optischen Strahlweiche nach dem Torsionsprinzip werden die Ausgangslichtwellenleiter erfindungsgemäß in Torsionsrichtung, also kreisförmig, angeordnet. Dies kann sowohl konzentrisch um die optische Achse des Strahlpropagationselements als auch exzentrisch erfolgen. Bei konzentrischer Anordnung wird der Strahl des Eingangslichtwellenleiters nach dem ersten oder zweiten Auslenkungsprinzip auf einen der Ausgangslichtwellenleiter gerichtet, wobei die Ausgangslichtwellenleiter gemäß des jeweils angewendeten ersten oder zweiten Auslenkungsprinzips an das Strahlpropagationselement angefügt sind. Bei exzentrischer Anordnung sind die Ausgangslichtwellenleiter näherungsweise parallel zueinander und rechtwinklig zur Stirnseite des Strahlpropagationselements angefügt, um eine geradlinige Strahlführung zu erzielen. Durch die exzentrische Anordnung der Ausgangslichtwellenleiter wird insbesondere ein vorheriges Auslenken zur Einkopplung des Strahls in einen der Ausgangswellenleiter vermieden. Das Umschalten zwischen den Ausgangslichtwellenleitern, d.h. die Auswahl des jeweils gewünschten Ausgangslichtwellenleiters - ausgehend von einem Ausgangslichtwellenleiter -, wird durch gezieltes Tordieren des Strahlpropagationselementes und/oder einer nachgeschalteten Fokussierungsoptik erreicht.

Vorzugsweise sind der mindestens eine Eingangslichtwellenleiter über ein Kollimationselement an die eine Stirnseite und die Ausgangslichtwellenleiter über ein gemeinsames bzw. über jeweils ein separates Fokussierungselement an die andere Stirnseite des Strahlpropagationselements angefügt, und zwar insbesondere durch Spleißen. Besonders bevorzugt sind die Kollimations- und Fokussierungselemente durch Gradientindex-Faserstücke mit parabolischem Brechzahlprofil gebildet, die auch als GRIN-Linsen bezeichnet werden. Das Anfügen der mehreren Ausgangswellenleiter an ein Fokussierungselement kann beispielsweise durch einen direkten Spleiß der Ausgangswellenleiter an das Fokussierungselement, durch das Spleißen der in einer Mehrfachkapillare fixierten Ausgangswellenleiter mit dem Fokussierungselement oder durch das Spleißen einer Mehrkernfaser mit dem Fokussierungselement erfolgen.

Die gesamte Freistrahlpropagation findet somit in einem einzelnen, monolithischen Element aus hochtransparentem und leistungstauglichem Material (typischerweise Quarzglas) statt, ohne dass der geführte Lichtstrahl die Lichtwellenleiter bzw. das Material, aus dem sie bzw. ihre Kerne gefertigt sind (meist Quarzglas), verlassen muss. Durch den Wegfall von diskreten optischen Elementen (Linsen, Spiegel etc.) und den kompakten, monolithischen Aufbau der erfindungsgemäßen optischen Strahlweiche wird die Anfälligkeit der Strahlweiche gegen Dejustagen durch Alterung und thermische Effekte und gegen Verschmutzung und Beschädigung durch Staub und andere Verunreinigungen drastisch reduziert. Gleichzeitig können durch den Wegfall von optischen Grenzflächen (z.B. Antireflex-Beschichtungen am ansonsten vorhandenen Übergang Luft/Glas) Koppelverluste minimiert werden.

Das Fügen des Strahlpropagationselements mit den Fokussierungs- bzw. Kollimationselementen erfolgt vorzugsweise mittels Stoßkontaktierung (so genannter "optischer Kontakt") oder alternativ mittels Spleißen. Bei der Stoßkontaktierung werden das Strahlpropagationselement und ein Fokussierungs- bzw. Kollimationselement in einer passgenauen Führung unter Berücksichtigung der Hertzschen Pressung aufeinander gepresst, wobei ein spaltfreier mechanischer und optischer Kontakt im Bereich der Strahlführung entsteht. Dieser Kontakt wird vorzugsweise mit dünnflüssigem Klebemittel in der Führung fixiert, wobei der Klebstoff nicht in den Bereich der Strahlführung eindringen sollte, da dies die Leistungstauglichkeit der Fügestelle beeinträchtigen würde. Bei einer Strahlweiche nach dem zweiten Auslenkungsprinzip können zum Fügen des Strahlpropagationselements mit den Fokussierungselementen auch Strahlpropagationselemente mit angeschrägten Fügeflächen verwendet werden.

Das Strahlpropagationselement und die Fokussierungselemente sind entweder unmittelbar oder mithilfe von Zwischenelementen aneinander angefügt. Im ersten Fall können angeschrägte Fügeflächen zur gegenseitigen Anfügung zwischen den Ausgangslichtwellenleitern und den Fokussierungselementen sowie zwischen dem Strahlpropagationselement und den Fokussierungselementen vorgesehen sein. Im zweiten Fall kann zwischen dem Strahlpropagationselement und den Fokussierungselementen jeweils ein separates Strahlpropagationszwischenelement eingefügt sein, in dem sich der Lichtstrahl frei ausbreitet. Das Strahtpropagationszwischenelement kann ein- oder beidseitig abgeschrägte Fügeflächen zur Anfügung des Strahlpropagationselements und der Fokussierungselemente aufweisen.

Die optischen Strahlweichen nach dem ersten und zweiten Auslenkungs- sowie dem Torsionsprinzip umfassen erfindungsgemäß jeweils auch eine entsprechende mechanische Auslenk- bzw. Torsionsvorrichtung. Diese mechanische Auslenk- bzw. Torsionsvorrichtung kann dabei eine Aufnahme für die optische Strahlweiche sein, die die für das jeweilige Schaltprinzip benötigte Schaltbewegung ausführt. Als Antriebe für die Schaltbewegung können beispielsweise elektromagnetische Linear- oder Drehantriebe, piezoelektrische Aktuatoren, pneumatische Aktuatoren oder auch Präzisionsmotoren dienen.

Besonders einfach gestaltet sich die Strahlweiche, wenn zwischen den - in einer Ebene angeordneten - Ausgangslichtwellenleitern mit Hilfe einer (translatorischen oder rotatorischen) eindimensionalen Bewegung ausgewählt werden kann. Allerdings begrenzt dies aufgrund der im flexiblen Strahlpropagationselement und/oder in einer nachgeschalteten Fokussierungsoptik auftretenden und mit der Auslenkung zunehmenden mechanischen Spannungen die Anzahl der Ausgangslichtwellenleiter. Eine weitere Erhöhung der Anzahl der Ausgangslichtwellenleiter kann durch Verwendung einer Bewegung in zwei Achsen und einer jeweils rechtwinklig zu den beiden Achsen zweidimensionalen Anordnung der Ausgangslichtwellenleiter erzielt werden.

Das erste Auslenkungsprinzip weist gegenüber dem zweiten Auslenkungsprinzip eine Reihe von Vorteilen auf; insbesondere wird - unabhängig von der Zahl der Ausgangslichtwellenleiter - nur ein Fokussierungselement benötigt. Weiterhin erleichtert die parallele Ausrichtung der Ausgangslichtwellenleiter deren Führung - etwa in einer gemeinsamen Mehrfachkapillare. Besonders günstig ist die Ausführungsform mit einer Multikernfaser anstelle von mehreren diskreten Ausgangslichtwellenleitern; hier können die Wellenleiter sehr dicht nebeneinander angeordnet werden, wodurch einerseits die erforderlichen Bewegungen und Kräfte minimiert werden. Andererseits besteht dadurch auch die Möglichkeit, sehr viele Ausgangswellenleiter in einer Strahlweiche zu integrieren. Bei gleicher Anzahl von Ausgangslichtwellenleitern sind beim ersten Auslenkungsprinzip die mechanischen Spannungen und die Doppelbrechung im Strahlpropagationselement typischerweise geringer als bei einer vergleichbaren Strahlweiche nach dem zweiten Auslenkungsprinzip.

Die oben genannte Aufgabe wird in einem zweiten Aspekt der Erfindung auch gelöst durch eine optische Strahlweiche mit den Merkmalen von Anspruch 4. Erfindungsgemäß sind die mehreren Eingangslichtwellenleiter (Eingangsfasern) an einem Ende und der mindestens eine Ausgangslichtwellenleiter (Ausgangsfaser) am gegenüberliegenden Ende des Strahlpropagationselements angefügt. Das Durchschalten eines der Eingangslichtwellenleiter auf den Ausgangslichtwellenleiter, d.h. das Auswählen des gewünschten Eingangslichtwellenleiters, wird durch gezieltes Auslenken und/oder Tordieren des Strahlpropagationselements und/oder einer vorgeschalteten Kollimationsoptik erreicht.

Basierend auf dieser Grundidee werden erfindungsgemäß auch hier drei alternative Ausführungsformen vorgeschlagen, die sich durch die Art der Einkopplung in das Strahlpropagationselement unterscheiden: Die erste Ausführungsform, im Folgenden als erstes Auslenkungsprinzip bezeichnet, verwendet eine gemeinsame Kollimationsoptik für alle Eingangswellenleiter (z.B. in Form eines GRIN-Faserstücks) für die Einkopplung in das Strahlpropagationselement, während die zweite Ausführungsform, im Folgenden als zweites Auslenkungsprinzip bezeichnet, für jeden Eingangswellenleiter eine separate Kollimationsoptik verwendet. Die dritte Ausführungsform, im Folgenden als Torsionsprinzip bezeichnet, kann sowohl eine gemeinsame als auch für jeden Eingangswellenleiter eine separate Kollimationsoptik verwenden. Für die drei Prinzipien ergeben sich - wie im Folgenden näher beschrieben - unterschiedliche Auslegungen des flexiblen Strahlpropagationselements und verschiedene geometrische Anordnungen für die Eingangswellenleiter. Vorstellbar ist in diesem Zusammenhang auch eine Kombination der alternativen Prinzipien.

Bei der optischen Strahlweiche nach dem ersten Auslenkungsprinzip werden erfindungsgemäß die Eingangslichtwellenleiter (Eingangsfasern) an einem Ende und der Ausgangslichtwellenleiter (Ausgangsfaser) am gegenüberliegenden Ende des Strahlpropagationselements angefügt. Dabei werden die Eingangslichtwellenleiter näherungsweise parallel zueinander und rechtwinklig zur Stirnseite des Strahlpropagationselements angefügt, um eine geradlinige Strahlführung zu erzielen. Das Umschalten zwischen den Eingangslichtwellenleitern, d.h. die Auswahl des jeweils gewünschten Eingangslichtwellenleiters, wird durch gezieltes Biegen bzw. Drehen der an die Eingangslichtwellenleiter angefügten Stirnseite des Strahlpropagationselements und/oder einer vorgeschalteten Kollimationsoptik um eine oder mehrere Achsen erreicht, welche vorzugsweise im Bereich desjenigen Endes des Strahlpropagationselements vorgesehen sind, an dem die mehreren Eingangslichtwellenleiter vorgesehen sind.

Bei der optischen Strahlweiche nach dem zweiten Auslenkungsprinzip werden erfindungsgemäß die Eingangslichtwellenleiter unter einem bestimmten Winkel (dem jeweiligen Biegewinkel) zur optischen Achse des Strahlpropagationselements angefügt, um eine geradlinige Strahlführung zu erzielen. Das Umschalten zwischen den Eingangslichtwellenleitern, d.h. die Auswahl des jeweils gewünschten Eingangslichtwellenleiters, wird durch gezieltes Auslenken des Strahlpropagationselements und/oder einer vorgeschalteten Kollimationsoptik um eine oder mehrere Achsen erreicht, welche vorzugsweise im Bereich desjenigen Endes Endes des Strahlpropagationselements vorgesehen sind, an dem der mindestens eine Ausgangslichtwellenleiter vorgesehen ist.

Bei der optischen Strahlweiche nach dem Torsionsprinzip werden die Eingangslichtwellenleiter erfindungsgemäß in Torsionsrichtung, also kreisförmig, angeordnet. Dies kann sowohl konzentrisch um die optische Achse des Strahlpropagationselements als auch exzentrisch erfolgen. Das Umschalten zwischen den Eingangslichtwellenleitern, d.h. die Auswahl des jeweils gewünschten Eingangslichtwellenleiters, wird durch gezieltes Tordieren des Strahlpropagationselementes erreicht.

Vorzugsweise sind die Eingangslichtwellenleiter über ein gemeinsames bzw. über jeweils ein separates Kollimationselement an die eine Stirnseite und der Ausgangslichtwellenleiter über ein Fokussierungselement an die andere Stirnseite des Strahlpropagationselements angefügt, und zwar insbesondere durch Spleißen. Besonders bevorzugt sind die Kollimations- und Fokussierungselemente durch Gradientindex-Faserstücke mit parabolischem Brechzahlprofil gebildet, die auch als GRIN-Linsen bezeichnet werden. Das Anfügen der mehreren Eingangswellenleiter an ein Kollimationselement kann beispielsweise durch einen direkten Spleiß der Eingangswellenleiter an das Kollimationselement, durch das Spleißen der in einer Mehrfachkapillare fixierten Eingangswellenleiter mit dem Kollimationselement oder durch das Spleißen einer Mehrkernfaser mit dem Kollimationselement erfolgen.

Weitere Vorteile der Erfindung ergeben sich aus den Ansprüchen, der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: ein Ausführungsbeispiel der erfindungsgemäßen optischen Strahlweiche mit einer Eingangsfaser und mit zwei Ausgangsfasern nach dem ersten Auslenkungsprinzip in einer ersten Weichenposition (Fig. 1a) und in einer zweiten Weichenposition (Fig. 1b);
- Fign. 2a-2d: mögliche Geometrien von Mehrfachkapillaren bzw. Mehrkernfasern für die Ausgangsfasern der in Fig. 1 gezeigten erfindungsgemäßen optischen Strahlweiche;
- Fign. 3a, 3b: ein Ausführungsbeispiel der erfindungsgemäßen optischen Strahlweiche mit einer Eingangsfaser und mit zwei Ausgangsfasern nach dem zweiten Auslenkungsprinzip in einer ersten Weichenposition (Fig. 3a) und in einer zweiten Weichenposition (Fig. 3b);
- Fig. 4: ein Ausführungsbeispiel der erfindungsgemäßen optischen Strahlweiche mit einer Eingangsfaser und mit mehreren Ausgangsfasern nach dem kombinierten ersten und zweiten Auslenkungs- und Torsionsprinzip; und
- Fign. 5 bis 7: Ausführungsbeispiele der erfindungsgemäßen optischen Strahlweiche mit zwei bzw. mehreren Eingangsfasern und einer Ausgangsfaser nach dem ersten und zweiten Auslenkungs- sowie dem Torsionsprinzip.

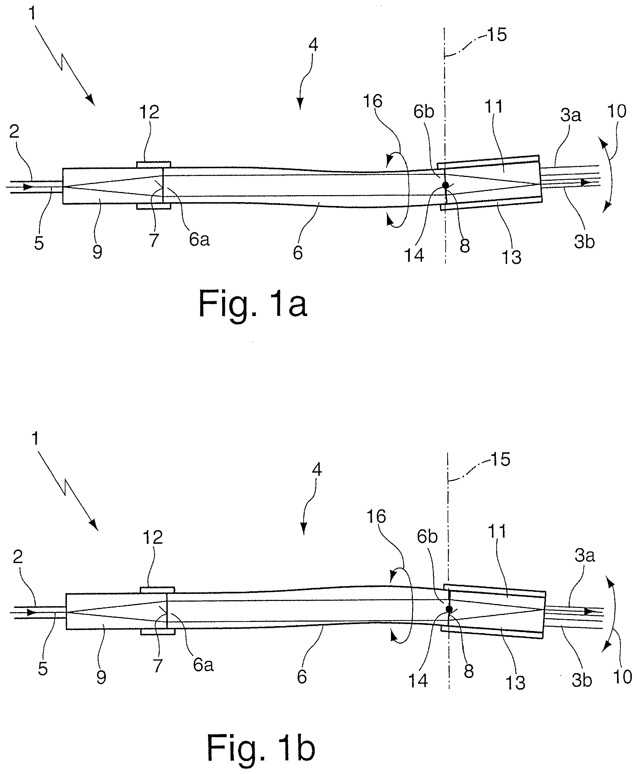

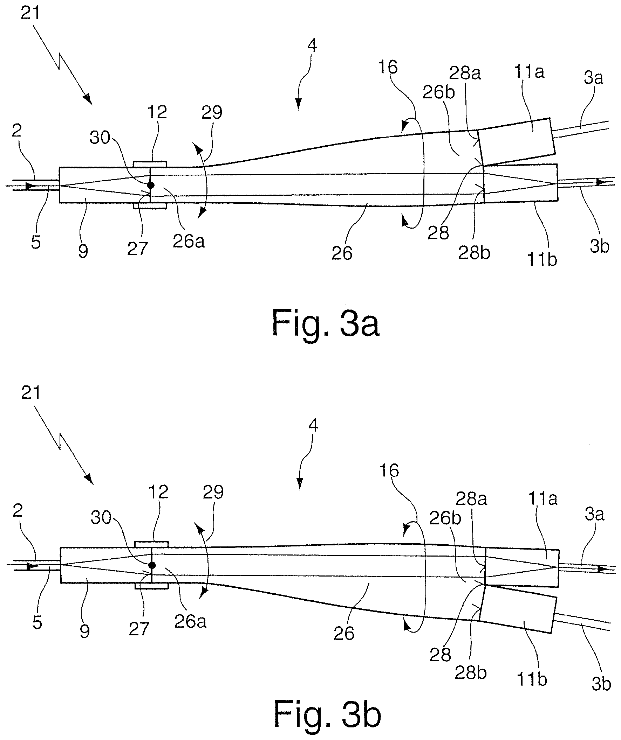

Die in **Fign. 1** **und** **3** gezeigten optischen Strahlweichen **1, 21** umfassen jeweils einen Eingangslichtwellenleiter (z.B. Glasfaser) **2,** zwei Ausgangslichtwellenleiter (z.B. Glasfasern) **3a, 3b** und ein dazwischen vorgesehenes optisches Schaltelement **4** zum Schalten eines im Eingangslichtwellenleiter 2 zugeführten Lichtstrahls **5** auf wahlweise den einen oder den anderen Ausgangslichtwellenleiter 3a, 3b. Die beiden Strahlweichen 1, 21 unterscheiden sich durch die Art der Einkopplung des Lichtstrahls 5 in die Ausgangslichtwellenleiter 3a, 3b. Die Strahlweiche 1 arbeitet nach dem sogenannten ersten Auslenkungsprinzip und verwendet eine gemeinsame Fokussieroptik für die wahlweise Einkopplung in die Ausgangslichtwellenleiter 3a, 3b, während die Strahlweiche 21 nach dem sogenannten zweiten Auslenkungsprinzip arbeitet und für jeden Ausgangslichtwellenleiter 3a, 3b eine separate Fokussieroptik verwendet.

Bei der in Fig. 1 gezeigten Strahlweiche 1 nach dem ersten Auslenkungsprinzip ist das optische Schaltelement 4 durch ein quer zu seiner optischen Längsachse elastisch auslenkbares, zylindrisches Strahlpropagationselement **6** mit zwei einander gegenüberliegenden Stirnseiten **7, 8** gebildet, in dem sich der Lichtstrahl 5 frei ausbreitet. Das Strahlpropagationselement 6 besteht aus hochtransparentem und leistungstauglichem Vollmaterial, wie z.B. Quarzglas.

Der Eingangslichtwellenleiter 2 ist über ein Gradientindex-Kollimationsfaserstück **9** mit parabolischem Brechzahlprofil und mit geeigneter Länge (1/4 Pitch) an die Eingangsstirnseite 7 des Strahlpropagationselements 6 durch Spleißen angefügt. Das Gradientindex-Kollimationsfaserstück 9 übernimmt die Funktion einer Kollimationslinse und wird im Folgenden kurz "GRIN-Kollimationslinse" genannt. Die Ausgangslichtwellenleiter 3a, 3b sind in Auslenkrichtung **10** des Strahlpropagationselements 6 nebeneinander angeordnet und über ein Gradientindex-Fokussierungsfaserstück **11** mit parabolischem Brechzahlprofil und mit geeigneter Länge (1/4 Pitch) an die Ausgangsstirnseite 8 des Strahlpropagationselements 6 durch Spleißen angefügt. Das Gradientindex-Fokussierungsfaserstück 11 übernimmt die Funktion einer Fokussierlinse und wird im Folgenden kurz "GRIN-Fokussierungslinse" genannt. Die Ausgangslichtwellenleiter 3a, 3b werden näherungsweise parallel zueinander und rechtwinklig zur Ausgangsstirnseite 8 des Strahlpropagationselements 6 angefügt, um eine geradlinige Strahlführung zu erzielen.

Die GRIN-Kollimationslinse 9 und das zugehörige Ende **6a** des Strahlpropagationselements 6 sind in einer Haltehülse **12,** die ortsfest fixiert ist, gehalten bzw. darin eingeklebt. Die GRIN-Fokussierungslinse 11 und das zugehörige Ende **6b** des Strahlpropagationselements 6 sind in einer Führungshülse **13** gehalten bzw. darin eingeklebt, die um eine im Bereich des Endes 6b des Strahlpropagationselements 6 vorgesehene Achse **14** in Auslenkrichtung 10 drehbar gelagert ist. Die Achse 14 liegt vorzugsweise innerhalb des von der Führungshülse 13 gehaltenen Endes 6b des Strahlpropagationselements 6 und liegt in Fig. 1 in der Ebene der Ausgangsstirnseite 8 des Strahlpropagationselements 6.

Das Umschalten des im Eingangslichtwellenleiter 2 zugeführten Lichtstrahls 5 zwischen den Ausgangslichtwellenleitern 3a, 3b wird durch gezieltes Auslenken der Führungshülse 13 und folglich des Endes 6b des Strahlpropagationselements 6 und/oder der nachgeschalteten GRIN-Fokussierungslinse 11 um die Achse 14 erreicht. In der in Fig. 1 a gezeigten ersten Weichenposition der Strahlweiche 1 wird der Lichtstrahl 5 in den Ausgangslichtwellenleiter 3b und in der in Fig. 1b gezeigten zweiten Weichenposition in den Ausgangslichtwellenleiter 3a eingekoppelt. Das Verhältnis von Länge und Dicke des Strahlpropagationselements 6 und/oder der nachgeschalteten GRIN-Fokussierungslinse 11 ist dabei ausreichend hoch, um eine Beschädigung des Strahlpropagationselements 6 und/oder der nachgeschalteten GRIN-Fokussierungslinse 11 auch bei häufigem und dauerhaftem Auslenken sicher zu vermeiden.

Das Anfügen der beiden Ausgangswellenleiter 3a, 3b oder von mehreren Ausgangswellenleitern an die GRIN-Fokussierungslinse 11 kann entweder durch einen direkten Spleiß der Ausgangswellenleiter 3a, 3b an die GRIN-Fokussierungslinse 11, durch das Spleißen der in einer Mehrfachkapillare fixierten Ausgangswellenleiter 3a, 3b mit der GRIN-Fokussierungslinse 11 oder durch das Spleißen einer Mehrkernfaser mit der GRIN-Fokussierungslinse 11 erfolgen. Die parallele Ausrichtung der Ausgangslichtwellenleiter 3a, 3b erleichtert deren Führung - etwa in einer gemeinsamen Mehrfachkapillare. Besonders günstig ist die Ausführungsform mit einer Multikernfaser anstelle von mehreren diskreten Ausgangslichtwellenleitern.

Eine weitere Erhöhung der Anzahl der Ausgangslichtwellenleiter kann durch Verwendung einer Bewegung in zwei Achsen, wie in Fig. 1 durch die weitere Achse **15** angedeutet ist, und einer jeweils rechtwinklig zu den beiden Achsen 14, 15 zweidimensionalen Anordnung der Ausgangslichtwellenleiter erzielt werden. Alternativ oder, wie in Fig. 1 gezeigt, zusätzlich zu der Auslenkung um die Achsen 14, 15 kann das Strahlpropagationselement 6 und/oder die nachgeschaltete GRIN-Fokussierungslinse 11 auch um seine Längsachse tordierbar sein, wodurch das ausgangsseitige Ende 6b des Strahlpropagationselements 6 samt GRIN-Fokussierungslinse 11 gegenüber dem eingangsseitigen Ende 6a in Torsionsrichtung **16** verdrehbar ist. Bei diesem Torsionsprinzip sind die Ausgangslichtwellenleiter in Torsionsrichtung 16 versetzt angeordnet, und das Umschalten zwischen den Ausgangslichtwellenleitern, d.h. die Auswahl des jeweils gewünschten Ausgangslichtwellenleiters, wird durch gezieltes Tordieren des Strahlpropagationselementes 6 und/oder der nachgeschalteten GRIN-Fokussierungslinse 11 erreicht.

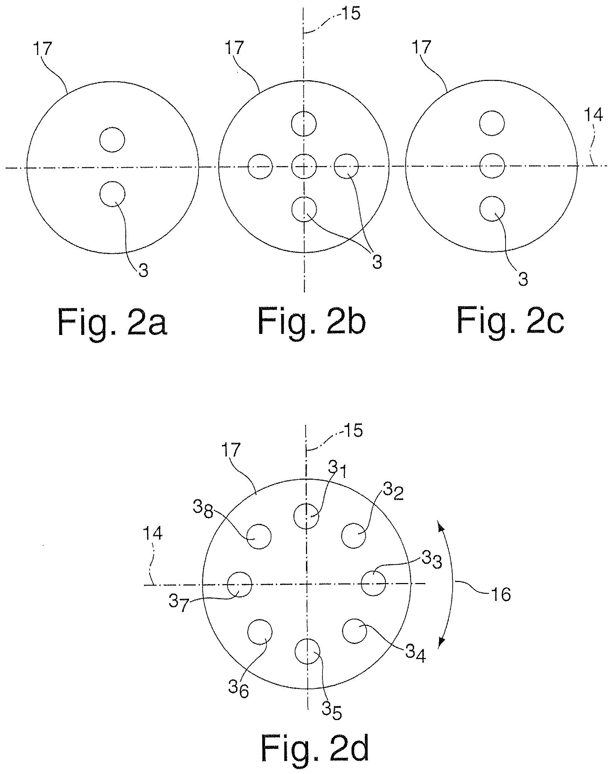

**Fign. 2a bis 2c** zeigen mögliche Geometrien einer als Mehrkernfaser oder als Faser mit Mehrfachkapillaren ausgebildeten Ausgangsfaser **17** für eine Strahlweiche 1 nach dem ersten Auslenkungsprinzip. In Fig. 2a und 2c sind zwei bzw. drei Kernfasern oder Kapillaren 3 der Ausgangsfasern 17 in einer Linie für eine Auslenkung des Strahlpropagationselements 6 und/oder der nachgeschalteten GRIN-Fokussierungslinse 11 um eine einzige Achse 14 angeordnet. In Fig. 2b sind fünf Kernfasern oder Kapillaren 3 der Ausgangsfasern 17 zweidimensional für eine Auslenkung des Strahlpropagationselements 6 und/oder der nachgeschalteten GRIN-Fokussierungslinse 11 um zwei Achsen 14, 15 angeordnet. **Fign. 2d** zeigt eine weitere mögliche Geometrie einer als Mehrkernfaser oder als Faser mit Mehrfachkapillaren ausgebildeten Ausgangsfaser 17 für eine Strahlweiche 1 nach dem kombinierten ersten Auslenkungs- und Torsionsprinzip. Acht Kapillaren **3₁** bis **3₈** der Ausgangsfaser 17 sind konzentrisch um die Faserachse (Torsionsachse) herum angeordnet. Die Kapillaren 3₁, 3₃, 3₅, 3₇ werden durch eine Auslenkung des Strahlpropagationselements 6 und/oder der nachgeschalteten GRIN-Fokussierungslinse 11 um die Achsen 14, 15 ausgewählt, während die übrigen Kapillare 3₂, 3₄, 3₆, 3₇ durch eine Kombination aus einer Auslenkung um eine der beiden Achsen 14, 15 und einer Torsionsbewegung um 45° ausgewählt werden können. Selbstverständlich können die acht Kapillaren 3₁ bis 3₈ auch allein durch gezieltes Tordieren oder eine zweiachsige Auslenkung um die Achsen 14, 15 des Strahlpropagationselementes 6 und/oder der nachgeschalteten GRIN-Fokussierungslinse 11 ausgewählt werden.

Bei der in Fig. 3 gezeigten Strahlweiche 21 nach dem zweiten Auslenkungsprinzip ist das optische Schaltelement 4 durch ein quer zu seiner optischen Längsachse elastisch biegsames, konisches Strahlpropagationselement 26 aus hochtransparentem und leistungstauglichem Vollmaterial, wie z.B. Quarzglas, gebildet, in dem sich der Lichtstrahl 5 frei ausbreitet. Das Strahlpropagationselement 26 verjüngt sich einseitig zur Eingangsstirnseite **27,** d.h., der Durchmesser des Strahlpropagationselements 26 an der Ausgangsstirnseite **28** ist gegenüber dem Durchmesser auf der Eingangsstirnseite 27 vergrößert, damit beim Auslenken des Strahlpropagationselements 26 um die Achse **30** in Auslenkrichtung **29** die kritischen Materialspannungen und die biegeinduzierte Doppelbrechung, die sich negativ auf Polarisationserhaltung und Koppeleffizienz der Strahlweiche 21 auswirken können, minimiert werden. Die Verjüngung des Strahlpropagationselements 26 kann durch Tapern oder durch gezieltes Schleifen erzeugt werden.

Der Eingangslichtwellenleiter 2 ist über die GRIN-Kollimationslinse 9 an die Eingangsstirnseite 27 des Strahlpropagationselements 26 durch Spleißen angefügt. Das Strahlpropagationselement 26 weist an seiner Ausgangsstirnseite 28 zwei individuell angeschrägte Fügeflächen **28a, 28b** für zwei GRIN-Fokussierungslinsen **11a, 11b** auf, an denen die in Auslenkrichtung 29 nebeneinander angeordneten Ausgangslichtwellenleiter 3a, 3b jeweils rechtwinklig angespleißt sind. Die GRIN-Kollimationslinse 9 und das zugehörige Ende **26a** des Strahlpropagationselements 26 sind in der ortsfest fixierten Haltehülse 12 gehalten bzw. darin eingeklebt. Das andere, freie Ende **26b** des Strahlpropagationselements 26 ist nicht eingespannt und kann folglich um die innerhalb der Haltehülse 12 befindliche Achse 30 in Auslenkrichtung 29 ausgelenkt werden. Die Ausgangslichtwellenleiter 3a, 3b sind unter einem bestimmten Winkel (dem jeweiligen Auslenkwinkel) zur optischen Achse des Strahlpropagationselements 26 angeordnet, um eine geradlinige Strahlführung des Lichtstrahls 5 zu erzielen.

Das Umschalten des im Eingangslichtwellenleiter 2 zugeführten Lichtstrahls 5 zwischen den Ausgangslichtwellenleitern 3a, 3b wird durch gezieltes Auslenken des freien Endes 26b des Strahlpropagationselements 26 in Auslenkrichtung 29 erreicht. In der in Fig. 3a gezeigten ersten Weichenposition der Strahlweiche 21 wird der Lichtstrahl 5 in den Ausgangslichtwellenleiter 3b und in der in Fig. 3b gezeigten zweiten Weichenposition in den Ausgangslichtwellenleiter 3a eingekoppelt. Das Verhältnis von Länge und Dicke des Strahlpropagationselements 26 ist dabei ausreichend hoch, um eine Beschädigung des Strahlpropagationselements 26 auch bei häufigem und dauerhaftem Biegen sicher zu vermeiden.

Um das Auslenken zu erleichtern, kann das Strahlpropagationselement 26 einen im Querschnitt reduzierten dünneren Mittelabschnitt (nicht gezeigt) aufweisen. Bei geeigneter Auslegung des dünneren Mittelabschnitts kann die Biegung des Strahlpropagationselements 26 auf den dünneren Mittelabschnitt eingeschränkt werden. Die Verwendung des dünneren Mittelabschnitts kann die biegeinduzierte Doppelbrechung in dem Strahlpropagationselement 26, die sich negativ auf Polarisationserhaltung und Koppeleffizienz der optischen Strahlweiche auswirken kann, reduzieren.

Wie in Fig. 3 lediglich angedeutet, kann auch bei der Strahlweiche 21 nach dem zweiten Auslenkungsprinzip das Strahlpropagationselement 26 zusätzlich in Torsionsrichtung 16 tordierbar gelagert sein, wobei in diesem Fall an jeder GRIN-Fokussierungslinse 11a, 11b mehrere in Torsionsrichtung 16 versetzt angeordnete Ausgangslichtwellenleiter (nicht gezeigt) angefügt sind.

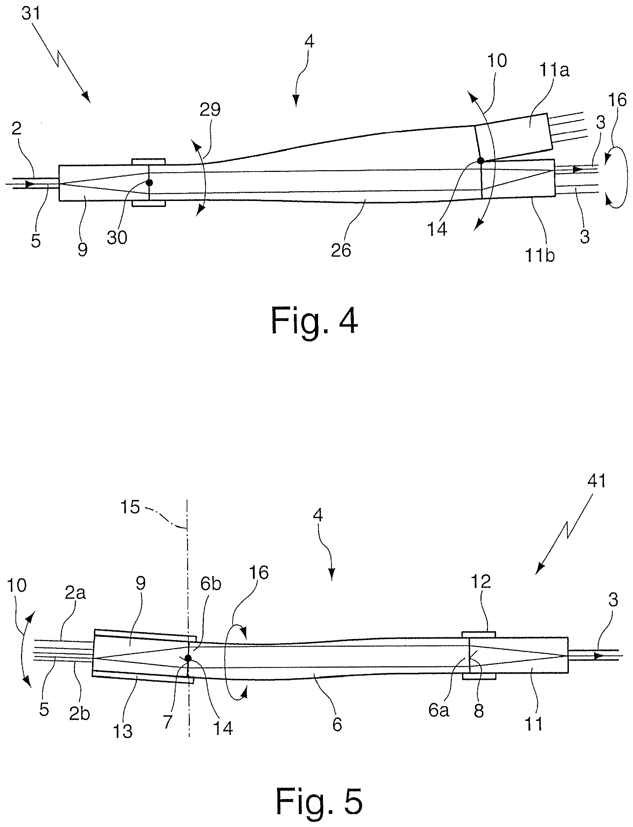

**Fig. 4** zeigt eine Strahlweiche **31** nach dem kombinierten ersten und zweiten Auslenkungs- und Torsionsprinzip. Der im Eingangslichtwellenleiter 2 zugeführte Lichtstrahl 5 wird über eine Auslenkung (29) des Strahlpropagationselements 26 um die Achse 30 entweder in die obere (11a) oder, wie in Fig. 4 gezeigt, in die untere GRIN-Fokussierungslinse 11b geleitet. Durch eine Auslenkung (10) des Strahlpropagationselements 26 und/oder der nachgeschalteten GRIN-Fokussierungslinsen 11a, 11b um die Achse 14 wird der Lichtstrahl 5 innerhalb der jeweiligen GRIN-Fokussierungslinse 11a, 11b entweder nach unten oder, wie in Fig. 4 gezeigt, nach oben geleitet. Das Strahlpropagationselement 26 ist zusätzlich in Torsionsrichtung 16 tordierbar. An jeder GRIN-Fokussierungslinse 11a, 11b sind mehrere in Torsionsrichtung 16 versetzt angeordnete Ausgangslichtwellenleiter 3 (nicht gezeigt) angefügt, in die der Lichtstrahl 5 jeweils durch entsprechendes Tordieren des Strahlpropagationselements 26 geleitet werden kann.

Die gesamte Strahlführung in den Strahlweichen 1, 21, 31 findet somit jeweils in einem einzelnen, monolithischen Element 6, 26 aus hochtransparentem und leistungstauglichem Material statt, wobei der Lichtstrahl 5 die Lichtwellenleiter 2, 3a, 3b bzw. das Material, aus dem sie bzw. ihre Kerne gefertigt sind (meist Quarzglas), nicht verlässt. Durch den Wegfall von separat justierbaren optischen Elementen (Linsen, Spiegel etc.) und den kompakten, monolithischen Aufbau wird die Anfälligkeit der Strahlweiche 1, 21, 31 gegen Dejustagen durch Alterung und thermische Effekte und gegen Verschmutzung und Beschädigung durch Staub und andere Verunreinigungen drastisch reduziert. Gleichzeitig können durch den Wegfall von optischen Grenzflächen (z.B. Antireflex-Beschichtungen am ansonsten vorhandenen Übergang Luft/Glas) Koppelverluste minimiert werden.

Die in den Fign. 1 bis 4 gezeigten Strahlweichen 1, 21, 31 können auch für den umgekehrten Anwendungsfall eingesetzt werden, bei dem ein in einem von mehreren Eingangslichtwellenleitern geführter Lichtstrahl auf einen Ausgangslichtwellenleiter geschaltet werden soll, wie im Folgenden mit Bezug auf die Fign. 5 bis 7 beschrieben wird.

Die in **Fig. 5** gezeigte Strahlweiche **41** entspricht der in umgekehrter Richtung betriebenen Strahlweiche 1. Bei der Strahlweiche 41 sind die beiden Eingangslichtwellenleiter 2a, 2a über eine GRIN-Kollimationslinse 9 an die eine Stirnseite 7 des Strahlpropagationselements 6 und der eine Ausgangslichtwellenleiter 3 über eine GRIN-Fokussierungslinse 11 an die andere Stirnseite 8 angefügt. Der über einen der Eingangslichtwellenleiter 2a, 2b jeweils zugeführte Lichtstrahl 5 kann durch Auslenken 10 des Strahlpropagationselements 6 und/oder der vorgeschalteten GRIN-Kollimationslinse 9 um die Achse 14 in den Ausgangslichtwellenleiter 3 weitergeleitet werden. Analog zur Strahlweiche 1 kann bei entsprechender Anordnung der Eingangslichtwellenleiter der gewünschte Eingangslichtwellenleiter auch durch Tordieren (16) des Strahlpropagationselements 6 und/oder der vorgeschalteten GRIN-Kollimationslinse 9 ausgewählt werden.

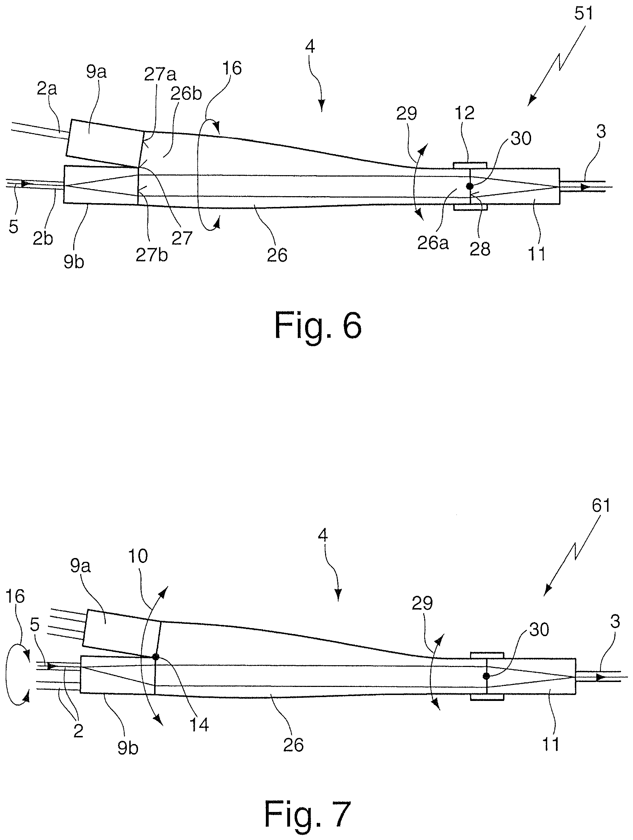

Die in **Fig. 6** gezeigte Strahlweiche **51** entspricht der in umgekehrter Richtung betriebenen Strahlweiche 21. Bei der Strahlweiche 51 sind die beiden Eingangslichtwellenleiter 2a, 2a jeweils über eine GRIN-Kollimationslinse **9a**, **9b** an die Fügeflächen **27a, 27b** der einen Stirnseite 27 des Strahlpropagationselements 26 und der eine Ausgangslichtwellenleiter 3 über eine GRIN-Fokussierungslinse 11 an die andere Stirnseite 28 angefügt. Der über einen der Eingangslichtwellenleiter 2a, 2b jeweils zugeführte Lichtstrahl 5 kann durch Auslenken (29) des Strahlpropagationselements 26 und/oder der vorgeschalteten GRIN-Kollimationslinse 9a, 9b um die Achse 30 in den Ausgangslichtwellenleiter 3 weitergeleitet werden. Analog zur Strahlweiche 21 kann bei entsprechender Anordnung der Eingangslichtwellenleiter der gewünschte Eingangslichtwellenleiter auch durch Tordieren (16) des Strahlpropagationselements 26 und/oder der vorgeschalteten GRIN-Kollimationslinse 9a, 9b ausgewählt werden.

Die in **Fig. 7** gezeigte Strahlweiche **61** entspricht der in umgekehrter Richtung betriebenen Strahlweiche 31, so dass die Beschreibung der einzelnen Komponenten ausgelassen ist. Bei der Strahlweiche 61 kann der über einen der Eingangslichtwellenleiter 2 jeweils zugeführte Lichtstrahl 5 durch Tordieren (16) des Strahlpropagationselements 26 und/oder der vorgeschalteten GRIN-Kollimationslinse 9a, 9b und Auslenken (10, 29) des Strahlpropagationselements 26 und/oder der vorgeschalteten GRIN-Kollimationslinsen 9a, 9b um die Achsen 14, 30 in den einen Ausgangslichtwellenleiter 3 weitergeleitet werden.

## Patentansprüche

1. Optische Strahlweiche (1; 21; 31)
mit mindestens einem Eingangslichtwellenleiter (2),
mit mehreren Ausgangslichtwellenleitern (3, 3a, 3b, 3₁ bis 3₈) und
mit einem dazwischen vorgesehenen optischen Schaltelement (4) zum Schalten des in dem mindestens einen Eingangslichtwellenleiter (2) geführten Lichtstrahls (5) auf wahlweise einen der Ausgangslichtwellenleiter (3, 3a, 3b, 3₁ bis 3₈), wobei das optische Schaltelement (4) durch ein Strahlpropagationselement (6; 26) mit zwei einander gegenüberliegenden Stirnseiten (7, 8; 27, 28), in dem sich der Lichtstrahl (5) frei ausbreitet, gebildet ist, wobei das Strahlpropagationselement (6; 26) aus einem elastisch biegsamen bzw. tordierbaren, transparenten Vollmaterial gebildet ist, wobei der mindestens eine Eingangslichtwellenleiter (2) unmittelbar oder über eine vorgeschaltete Kollimationsoptik an die eine Stirnseite (7; 27) des Strahlpropagationselements (6; 26) angefügt ist, und wobei die Ausgangslichtwellenleiter (3, 3a, 3b, 3₁ bis 3₈) in mindestens einer Auslenkrichtung (10; 29) bzw. in Torsionsrichtung (16) des Strahlpropagationselements (6; 26) nebeneinander angeordnet und unmittelbar oder über eine nachgeschaltete Fokussierungsoptik an die andere Stirnseite (8; 28) des Strahlpropagationselements (6; 26) angefügt sind,
wobei das Strahlpropagationselement (6; 26) und gegebenenfalls die nachgeschaltete Fokussierungsoptik quer zu ihrer optischen Achse auslenkbar und/oder um ihre optische Achse oder parallel dazu tordierbar sind.

2. Optische Strahlweiche nach Anspruch 1, **dadurch gekennzeichnet, dass** der mindestens eine Eingangslichtwellenleiter (2) über ein Kollimationselement (9), insbesondere ein Gradientindex-Kollimationsfaserstück, an die eine Stirnseite (7; 27) des Strahlpropagationselements (6; 26) angefügt ist.

3. Optische Strahlweiche nach Anspruch 1 oder 2, **dadurch gekennzeichnet, dass** die Ausgangslichtwellenleiter (3, 3a, 3b, 3₁ bis 3₈) über ein gemeinsames Fokussierungselement (11), insbesondere ein Gradientindex-Fokussierungsfaserstück, an die andere Stirnseite (8) des Strahlpropagationselements (6) angefügt sind oder dass die Ausgangslichtwellenleiter (3a, 3b) jeweils über separate Fokussierungselemente (11a, 11b), insbesondere Gradientindex-Fokussierungsfaserstücke, an die andere Stirnseite (28) des Strahlpropagationselements (26) angefügt sind.

4. Optische Strahlweiche (41; 51; 61)
mit mehreren Eingangslichtwellenleitern (2, 2a, 2b),
mit mindestens einem Ausgangslichtwellenleiter (3) und
mit einem dazwischen vorgesehenen optischen Schaltelement (4) zum wahlweisen Schalten eines in einem der Eingangslichtwellenleiter (2, 2a, 2b) geführten Lichtstrahls (5) auf den mindestens einen Ausgangslichtwellenleiter (3),
wobei das optische Schaltelement (4) durch ein Strahlpropagationselement (6; 26) mit zwei einander gegenüberliegenden Stirnseiten (7, 8; 27, 28), in dem sich der Lichtstrahl (5) frei ausbreitet, gebildet ist,
wobei das Strahlpropagationselement (6; 26) aus einem festen, aber biegsamen bzw. tordierbaren, transparenten Vollmaterial gebildet ist, wobei die Eingangslichtwellenleiter (2, 2a, 2b) in mindestens einer Auslenkrichtung (10; 29) bzw. in Torsionsrichtung (16) des Strahlpropagationselements (6; 26) nebeneinander angeordnet und unmittelbar oder über eine vorgeschaltete Kollimationsoptik an die eine Stirnseite (7; 27) des Strahlpropagationselements (6; 26) angefügt sind, und
wobei der mindestens eine Ausgangslichtwellenleiter (3) unmittelbar oder über eine nachgeschaltete Fokussierungsoptik an die andere Stirnseite (8; 28) des Strahlpropagationselements (6; 26) angefügt ist,
wobei das optische Schaltelement (6, 26) und gegebenenfalls die vorgeschaltete Kollimationsoptik quer zu ihrer optischen Achse auslenkbar und/oder um ihre optische Achse oder parallel dazu tordierbar sind.

5. Optische Strahlweiche nach Anspruch 4, **dadurch gekennzeichnet, dass** die Eingangslichtwellenleiter (2a, 2b) über ein gemeinsames Kollimationselement (9), insbesondere ein Gradientindex-Kollimationsfaserstück, an die eine Stirnseite (7) des Strahlpropagationselements (6) angefügt sind oder dass die Eingangslichtwellenleiter (2a, 2b) jeweils über separate Kollimationselemente (9a, 9b), insbesondere Gradientindex-Kollimationsfaserstücke, an die eine Stirnseite (27) des Strahlpropagationselements (26) angefügt sind.

6. Optische Strahlweiche nach einem der Ansprüche 4 bis 5, **dadurch gekennzeichnet, dass** der mindestens eine Ausgangslichtwellenleiter (3) über ein Fokussierungselement (11), insbesondere ein Gradientindex-Fokussierungsfaserstück, an die andere Stirnseite (8; 28) des Strahlpropagationselements (6; 26) angefügt ist.

7. Optische Strahlweiche nach einem der Ansprüche 2 bis 3 und 5 bis 6, **dadurch gekennzeichnet, dass** die Elemente (9, 9a, 9b, 11, 11a, 11b) jeweils ein parabolisches Brechzahlprofil aufweisen.

8. Optische Strahlweiche nach einem der Ansprüche 2 bis 3 und 5 bis 7, **dadurch gekennzeichnet, dass** die Elemente (9, 9a, 9b, 11, 11a, 11b) an das Strahlpropagationselement (6; 26) und an die Eingangs- und Ausgangslichtwellenleiter (2, 2a, 2b, 3, 3a, 3b, 3₁ bis 3₈) durch Spleißen angefügt sind.

9. Optische Strahlweiche nach einem der vorhergehenden Ansprüche, **dadurch gekennzeichnet, dass** das Strahlpropagationselement (6; 26) und/oder die Eingangslichtwellenleiter (2a, 2b) und/oder die Kollimationselemente (9a, 9b) und/oder die Ausgangslichtwellenleiter (3a, 3b) und/oder die Fokussierungsfaserstücke (11a, 11b) angeschrägte Fügeflächen (27, 27b; 28a, 28b) zur gegenseitigen Anfügung aufweisen.

10. Optische Strahlweiche nach einem der vorhergehenden Ansprüche, **dadurch gekennzeichnet, dass** die mehreren Eingangslichtwellenleiter (2a, 2b) bzw. die mehreren Ausgangslichtwellenleiter (3a, 3b) parallel zueinander verlaufen oder zueinander unter einem Winkel angeordnet sind.

11. Optische Strahlweiche nach einem der vorhergehenden Ansprüche, **dadurch gekennzeichnet, dass** das Strahlpropagationselement (6, 26) um mindestens eine Achse (14, 30) auslenkbar gelagert ist und die mehreren Eingangslichtwellenleiter (2a, 2b) bzw. die mehreren Ausgangslichtwellenleiter (3a, 3b) in einer rechtwinklig zur mindestens einen Achse (14; 30) verlaufenden Linie angeordnet sind.

12. Optische Strahlweiche nach einem der Ansprüche 1 bis 10, **dadurch gekennzeichnet, dass** das Strahlpropagationselement (26) um zwei, insbesondere rechtwinklig zueinander verlaufende, Achsen (14, 15) auslenkbar gelagert ist und die mehreren Eingangslichtwellenleiter (2, 2a, 2b) bzw. die mehreren Ausgangslichtwellenleiter (3, 3a, 3b) jeweils rechtwinklig zu den beiden Achsen (14, 15) zweidimensional angeordnet sind.

13. Optische Strahlweiche nach einem der vorhergehenden Ansprüche, **dadurch gekennzeichnet, dass** eine Achse bzw. Achsen (14, 15,-30) im Bereich desjenigen Endes (6a, 26a) des Strahlpropagationselements (6; 26) vorgesehen sind, an dem der mindestens eine Eingangs- bzw. Ausgangslichtwellenleiter (2, 3) vorgesehen ist.

14. Optische Strahlweiche nach einem der vorhergehenden Ansprüche, **dadurch gekennzeichnet, dass** eine Achse bzw. Achsen (14, 15, 30) im Bereich desjenigen Endes (6b, 26b) des Strahlpropagationselements (6; 26) vorgesehen sind, an dem die mehreren Eingangs- bzw. Ausgangslichtwellenleiter (2, 2a, 2b; 3, 3a, 3b) vorgesehen sind,

15. Optische Strahlweiche nach einem der vorhergehenden Ansprüche, **dadurch gekennzeichnet, dass** die mehreren Eingangslichtwellenleiter (2, 2a, 2b) bzw. die mehreren Ausgangslichtwellenleiter (3a, 3b, 3₁ bis 3₈) durch die Kapillaren einer Mehrfachkapillarfaser (16) oder durch die Fasern einer Multikernfaser (16) gebildet sind.

## Claims

1. Optical beam switch (1; 21; 31) comprising
at least one input optical wave guide (2),
a plurality of output optical wave guides (3, 3a, 3b, 3₁ to 3₈), and
an optical switching element (4) which is provided therebetween for switching the light beam (5) which is guided in the at least one input optical wave guide (2) selectively to one of the output optical wave guides (3, 3a, 3b, 3₁ to 3₈), wherein the optical switching element (4) is formed by a beam propagation element (6; 26) having two mutually opposed end faces (7, 8; 27, 28) in which the light beam (5) freely expands,
wherein the beam propagation element (6; 26) is formed from an elastically flexible or twistable transparent solid material,
wherein the at least one input optical wave guide (2) is attached directly or via an upstream optical collimation system to one end face (7; 27) of the beam propagation element (6; 26),
wherein the output optical wave guides (3, 3a, 3b, 3₁ to 3₈) are arranged beside each other in at least one deflection direction (10; 29) or in the twisting direction (16) of the beam propagation element (6; 26) and are attached directly or via a downstream optical focusing system to the other end face (8; 28) of the beam propagation element (6; 26), and
wherein the beam propagation element (6; 26) and optionally the downstream optical focussing system can be deflected transversely to their optical axis and/or can be twisted about their optical axis or parallel thereto.

2. Optical beam switch according to claim 1, **characterised in that** the at least one input optical wave guide (2) is attached via a collimation element (9), in particular a gradient index collimation fibre piece, to the one end face (7; 27) of the beam propagation element (6; 26).

3. Optical beam switch according to claim 1 or claim 2, **characterised in that** the output optical wave guides (3, 3a, 3b, 3₁ to 3₈) are attached via a common focusing element (11), in particular a gradient index focusing fibre piece, to the other end face (8) of the beam propagation element (6), or that the output optical wave guides (3a, 3b) are each attached via separate focusing elements (11a, 11b), in particular gradient index focusing fibre pieces, to the other end face (28) of the beam propagation element (26).

4. Optical beam switch (41; 51; 61) comprising
a plurality of input optical wave guides (2, 2a, 2b),
at least one output optical wave guide (3), and
an optical switching element (4) which is provided therebetween for selectively switching a light beam (5) which is guided in one of the input optical wave guides (2, 2a, 2b) to the at least one output optical wave guide (3),
wherein the optical switching element (4) is formed by a beam propagation element (6; 26) having two mutually opposed end faces (7, 8; 27, 28) in which the light beam (5) freely expands,
wherein the beam propagation element (6; 26) is formed from a solid but flexible or twistable transparent solid material,
wherein the input optical wave guides (2, 2a, 2b) are arranged beside each other in at least one deflection direction (10; 29) or in the twisting direction (16) of the beam propagation element (6; 26) and are attached directly or via an upstream optical collimation system to one end face (7; 27) of the beam propagation element (6; 26),
wherein the at least one output optical wave guide (3) is attached directly or via a downstream optical focusing system to the other end face (8; 28) of the beam propagation element (6; 26), and
wherein the optical switching element (6, 26) and optionally the upstream optical collimation system can be deflected transversely to their optical axis and/or can be twisted about their optical axis or parallel thereto.

5. Optical beam switch according to claim 4, **characterised in that** the input optical wave guides (2a, 2b) are attached via a common collimation element (9), in particular a gradient index collimation fibre piece, to one end face (7) of the beam propagation element (6) or that the input optical wave guides (2a, 2b) are each attached via separate collimation elements (9a, 9b), in particular gradient index collimation fibre pieces, to one end face (27) of the beam propagation element (26).

6. Optical beam switch according to any one of claims 4 to 5, **characterised in that** the at least one output optical wave guide (3) is attached via a focusing element (11), in particular a gradient index focusing fibre piece, to the other end face (8; 28) of the beam propagation element (6; 26).

7. Optical beam switch according to any one of claims 2 to 3 and 5 to 6, **characterised in that** the elements (9, 9a, 9b, 11, 11a, 11b) each have a parabolic refractive index profile.

8. Optical beam switch according to any one of claims 2 to 3 and 5 to 7, **characterised in that** the elements (9, 9a, 9b, 11, 11a, 11b) are attached to the beam propagation element (6; 26) and to the input and output optical wave guides (2, 2a, 2b, 3, 3a, 3b, 3₁ to 3₈) by means of splicing.

9. Optical beam switch according to any one of the preceding claims, **characterised in that** the beam propagation element (6; 26) and/or the input optical wave guides (2a, 2b) and/or the collimation elements (9a, 9b) and/or the output optical wave guides (3a, 3b) and/or the focusing fibre pieces (11a, 11b) have chamfered joining faces (27, 27b; 28a, 28b) for mutual attachment.

10. Optical beam switch according to any one of the preceding claims, **characterised in that** the plurality of input optical wave guides (2a, 2b) or the plurality of output optical wave guides (3a, 3b) extend parallel with respect to each other or are arranged at an angle relative to each other.

11. Optical beam switch according to any one of the preceding claims, **characterised in that** the beam propagation element (6, 26) is supported so as to be able to be deflected about at least one axis (14, 30) and the plurality of input optical wave guides (2a, 2b) or the plurality of output optical wave guides (3a, 3b) are arranged in a line which extends perpendicularly relative to the at least one axis (14; 30).

12. Optical beam switch according to any one of claims 1 to 10, **characterised in that** the beam propagation element (26) is supported so as to be able to be deflected about two axes (14, 15) which extend in particular perpendicularly relative to each other and the plurality of input optical wave guides (2, 2a, 2b) or the plurality of output optical wave guides (3, 3a, 3b) are arranged in each case in a two-dimensional manner perpendicularly relative to the two axes (14, 15).

13. Optical beam switch according to any one of the preceding claims, **characterised in that** an axis or axes (14, 15, 30) is/are provided in the region of that end (6a, 26a) of the beam propagation element (6; 26) at which the at least one input or output optical wave guide (2, 3) is provided.

14. Optical beam switch according to any one of the preceding claims, **characterised in that** an axis or axes (14, 15, 30) is/are provided in the region of that end (6b, 26b) of the beam propagation element (6; 26) at which the plurality of input or output optical wave guides (2, 2a, 2b; 3, 3a, 3b) are provided.

15. Optical beam switch according to any one of the preceding claims, **characterised in that** the plurality of input optical wave guides (2, 2a, 2b) or the plurality of output optical wave guides (3a, 3b, 3₁ to 3₈) are formed by the capillaries of a multi-capillary fibre (16) or by the fibres of a multi-core fibre (16).

## Revendications

1. Dispositif optique d'aiguillage de faisceau (1 ; 21 ; 31) comprenant au moins un guide d'ondes optiques d'entrée (2),
plusieurs guides d'ondes optiques de sortie (3, 3a, 3b, 3₁ à 3₈) et
un élément de commutation optique (4) prévu entre eux pour commuter le faisceau lumineux (5) guidé dans ledit au moins un guide d'ondes optiques d'entrée (2) au choix vers l'un des guides d'ondes optiques de sortie (3, 3a, 3b, 3₁ à 3₈),
dans lequel l'élément de commutation optique (4) est formé par un élément de propagation de faisceau (6 ; 26) comportant deux faces frontales (7, 8 ; 27, 28) en vis-à-vis et dans lequel le faisceau lumineux (5) se propage librement,
dans lequel l'élément de propagation de faisceau (6 ; 26) est formé d'un matériau plein transparent pouvant être plié ou tordu élastiquement,
dans lequel ledit au moins un guide d'ondes optiques d'entrée (2) est joint à une face frontale (7 ; 27) de l'élément de propagation de faisceau (6 ; 26) directement ou par l'intermédiaire d'une optique de collimation disposée en amont, et
dans lequel les guides d'ondes optiques de sortie (3, 3a, 3b, 3₁ à 3₈) sont disposés côte à côte dans au moins une direction de déviation (10 ; 29) ou dans la direction de torsion (16) de l'élément de propagation de faisceau (6 ; 26) et joints à l'autre face frontale (8 ; 28) de l'élément de propagation de faisceau (6 ; 26) directement ou par l'intermédiaire d'une optique de focalisation disposée en aval,
dans lequel l'élément de propagation de faisceau (6 ; 26) et, le cas échéant, l'optique de focalisation disposée en aval peuvent être déviés transversalement à leur axe optique et/ou tordus autour de leur axe optique ou parallèlement à celui-ci.

2. Dispositif optique d'aiguillage de faisceau selon la revendication 1, **caractérisé en ce que** ledit au moins un guide d'ondes optiques d'entrée (2) est joint à une face frontale (7 ; 27) de l'élément de propagation de faisceau (6 ; 26) par l'intermédiaire d'un élément de collimation (9), en particulier d'une portion de fibre de collimation à gradient d'indice.

3. Dispositif optique d'aiguillage de faisceau selon la revendication 1 ou 2, **caractérisé en ce que** les guides d'ondes optiques de sortie (3, 3a, 3b, 3₁ à 3₈) sont joints à l'autre face frontale (8) de l'élément de propagation de faisceau (6) par l'intermédiaire d'un élément de focalisation commun (11), en particulier d'une portion de fibre de focalisation à gradient d'indice, ou que les guides d'ondes optiques de sortie (3a, 3b) sont joints à l'autre face frontale (28) de l'élément de propagation de faisceau (26) chaque fois par l'intermédiaire d'éléments de focalisation séparés (11a, 11b), en particulier de portions de fibre de focalisation à gradient d'indice.

4. Dispositif optique d'aiguillage de faisceau (41 ; 51 ; 61) comprenant plusieurs guide d'ondes optiques d'entrée (2, 2a, 2b),
au moins un guide d'ondes optiques de sortie (3) et
un élément de commutation optique (4) prévu entre eux pour commuter au choix un faisceau lumineux (5) guidé dans l'un des guides d'ondes optiques d'entrée (2, 2a, 2b) vers le guide d'ondes optiques de sortie (3),
dans lequel l'élément de commutation optique (4) est formé par un élément de propagation de faisceau (6 ; 26) comportant deux faces frontales (7, 8 ; 27, 28) en vis-à-vis et dans lequel le faisceau lumineux (5) se propage librement,
dans lequel l'élément de propagation de faisceau (6 ; 26) est formé d'un matériau plein transparent solide, mais pouvant être plié ou tordu,
dans lequel les guides d'ondes optiques d'entrée (2, 2a, 2b) sont disposés côte à côte dans au moins une direction de déviation (10 ; 29) ou dans la direction de torsion (16) de l'élément de propagation de faisceau (6 ; 26) et joints à une face frontale (7 ; 27) de l'élément de propagation de faisceau (6 ; 26) directement ou par l'intermédiaire d'une optique de collimation disposée en amont, et
dans lequel ledit au moins un guide d'ondes optiques de sortie (3) est joint à l'autre face frontale (8 ; 28) de l'élément de propagation de faisceau (6 ; 26) directement ou par l'intermédiaire d'une optique de focalisation disposée en aval, dans lequel l'élément de commutation optique (6, 26) et, le cas échéant, l'optique de collimation disposée en amont peuvent être déviés transversalement à leur axe optique et/ou tordus autour de leur axe optique ou parallèlement à celui-ci.

5. Dispositif optique d'aiguillage de faisceau selon la revendication 4, **caractérisé en ce que** les guides d'ondes optiques d'entrée (2a, 2b) sont joints à une face frontale (7) de l'élément de propagation de faisceau (6) par l'intermédiaire d'un élément de collimation commun (9), en particulier d'une portion de fibre de collimation à gradient d'indice, ou que les guides d'ondes optiques d'entrée (2a, 2b) sont joints à une face frontale (27) de l'élément de propagation de faisceau (26) chaque fois par l'intermédiaire d'éléments de collimation séparés (9a, 9b), en particulier de portions de fibre de collimation à gradient d'indice.

6. Dispositif optique d'aiguillage de faisceau selon l'une des revendications 4 à 5, **caractérisé en ce que** ledit au moins un guide d'ondes optiques de sortie (3) est joint à l'autre face frontale (8 ; 28) de l'élément de propagation de faisceau (6 ; 26) par l'intermédiaire d'un élément de focalisation (11), en particulier d'une portion de fibre de focalisation à gradient d'indice.

7. Dispositif optique d'aiguillage de faisceau selon l'une des revendications 2 à 3 et 5 à 6, **caractérisé en ce que** les éléments (9, 9a, 9b, 11, 11a, 11b) présentent chacun un profil d'indice de réfraction parabolique.

8. Dispositif optique d'aiguillage de faisceau selon l'une des revendications 2 à 3 et 5 à 7, **caractérisé en ce que** les éléments (9, 9a, 9b, 11, 11a, 11b) sont joints à l'élément de propagation de faisceau (6 ; 26) et aux guides d'ondes optiques d'entrée et de sortie (2, 2a, 2b, 3, 3a, 3b, 3₁ à 3₈) par épissage.

9. Dispositif optique d'aiguillage de faisceau selon l'une des revendications précédentes, **caractérisé en ce que** l'élément de propagation de faisceau (6 ; 26) et/ou les guides d'ondes optiques d'entrée (2a, 2b) et/ou les éléments de collimation (9a, 9b) et/ou les guides d'ondes optiques de sortie (3a, 3b) et/ou les portions de fibre de focalisation (11a, 11b) présentent des surfaces de jonction biseautées (27, 27b ; 28a, 28b) pour leur jonction mutuelle.

10. Dispositif optique d'aiguillage de faisceau selon l'une des revendications précédentes, **caractérisé en ce que** lesdits plusieurs guides d'ondes optiques d'entrée (2a, 2b) ou lesdits plusieurs guides d'ondes optiques de sortie (3a, 3b) s'étendent parallèlement les uns aux autres ou sont disposés suivant un angle les uns par rapport aux autres.

11. Dispositif optique d'aiguillage de faisceau selon l'une des revendications précédentes, **caractérisé en ce que** l'élément de propagation de faisceau (6, 26) est monté de façon à pouvoir être dévié autour d'au moins un axe (14, 30) et lesdits plusieurs guides d'ondes optiques d'entrée (2a, 2b) ou lesdits plusieurs guides d'ondes optiques de sortie (3a, 3b) sont disposés sur une ligne s'étendant à angle droit par rapport audit au moins un axe (14 ; 30).

12. Dispositif optique d'aiguillage de faisceau selon l'une des revendications 1 à 10, **caractérisé en ce que** l'élément de propagation de faisceau (26) est monté de façon à pouvoir être dévié autour de deux axes (14, 15), en particulier s'étendant à angle droit l'un par rapport à l'autre et lesdits plusieurs guides d'ondes optiques d'entrée (2, 2a, 2b) ou lesdits plusieurs guides d'ondes optiques de sortie (3, 3a, 3b) sont respectivement disposés bidimensionnellement à angle droit par rapport aux deux axes (14, 15).

13. Dispositif optique d'aiguillage de faisceau selon l'une des revendications précédentes, **caractérisé en ce qu'**un axe ou les axes (14, 15, 30) sont prévus dans la zone de l'extrémité (6a, 26a) de l'élément de propagation de faisceau (6 ; 26) à laquelle ledit au moins un guide d'ondes optiques d'entrée ou de sortie (2, 3) est prévu.

14. Dispositif optique d'aiguillage de faisceau selon l'une des revendications précédentes, **caractérisé en ce qu'**un axe ou les axes (14, 15, 30) sont prévus dans la zone de l'extrémité (6b, 26b) de l'élément de propagation de faisceau (6 ; 26) à laquelle lesdits plusieurs guides d'ondes optiques d'entrée ou de sortie (2, 2a, 2b ; 3, 3a, 3b) sont prévus.

15. Dispositif optique d'aiguillage de faisceau selon l'une des revendications précédentes, **caractérisé en ce que** lesdits plusieurs guides d'ondes optiques d'entrée (2, 2a, 2b) ou lesdits plusieurs guides d'ondes optiques de sortie (3a, 3b, 3₁ à 3₈) sont formés par les capillaires d'une fibre à capillaires multiples (16) ou par les fibres d'une fibre à noyaux multiples (16).
